# EUROPEAN PATENT SPECIFICATION

(11) **EP 4 235 925 B1**
(45) Date of publication and mention of the grant of the patent: **02.12.2026**
(21) Application number: 23167889.7
(22) Date of filing: 22.02.2019
(51) Int. Cl.: H01M 50/242

(54) **BATTERY PACK**
BATTERIEPACK
BLOC-BATTERIE

(30) Priority: 29.12.2018 CN 201811637272
(43) Date of publication of application: 30.08.2023
(62) Document number(s) of the earlier application(s) in accordance with Art. 76 EPC: 19905409.9 / 3 796 412
(73) Proprietor: Contemporary Amperex Technology (Hong Kong) Limited, Central, Central And Western District (HK)
(72) Inventor: CHU, Yannan, Ningde, Fujian, 352100 (CN); QIAN, Mu, Ningde, Fujian, 352100 (CN); JI, Jinqing, Ningde, Fujian, 352100 (CN)
(74) Representative: Pfenning, Meinig & Partner mbB

(56) References cited:
- EP-A1- 2 325 922
- EP-A1- 3 062 361
- JP-A- 2007 027 011
- US-A1- 2016 099 451

## Description

The present application claims priority to Chinese patent application No. 201811637272.7, filed to the China National Intellectual Property Administration on December 29, 2018, entitled "Battery pack'.

### TECHNICAL FIELD

The present application relates to the technical field of batteries, and particularly relates to a battery pack.

### BACKGROUND

In recent years, the emergence of new energy vehicles has played a huge role in promoting social development and environmental protection, and a power battery pack, which serves as a rechargeable battery, is a power source of the new energy vehicle, and is widely used in the field of new energy vehicles.

The battery pack will produce some side reactions under short circuits, overcharging, etc., and then produce a certain amount of gas at a certain temperature, and when the produced gas increases to a certain extent, it will lead to a thermal runaway phenomenon, and then an explosion-proof valve arranged towards a vehicle cabin is exploded, and ejects a high-pressure and high-temperature gas towards the vehicle cabin, thereby affecting the safety in the vehicle cabin.

JP2007027011A discloses a power source device. The power source device is composed of a plurality of batteries having a safety valve housed in a case. The case is divided into a battery chamber housing the plurality of batteries and an exhaustion chamber exhausting the gas exhausted from the safety valve of the batteries housed in the battery chamber, by a separation wall. An opening part of the safety valve of the batteries housed in the battery chamber are arranged so as to communicate with the exhaustion chamber. On the power source device, the safety valve is opened, and the gas exhausted from the safety valve flows into the exhaustion chamber without flowing into the battery chamber , and exhausted to the outside of the case from the exhaustion chamber.

US2016099451A1 discloses an on-board power source device comprising power storage modules. In the power storage modules, a plurality of power storage elements are arranged. The power storage module is stacked one upon another. An outlet of a discharge path is provided for discharging gas generated in the respective power storage elements. A frame member extends along the end portion of the power storage modules for fixing the respective upper and lower power storage modules. A bracket locates at the end portion of the power storage modules so as to cover the outlets, for fixing the upper power storage modules to the frame member. The frame member has a discharge space for discharging the gas to the outside of the vehicle. The bracket is provide with a passage part for communicating the outlet of the upper power storage module with the discharge space of the frame member.

EP3062361A1 discloses a frame for secondary batteries, which ensures a channel around cooling plates stably to improve cooling efficiency for secondary batteries; and a battery module, a battery pack and a vehicle comprising the same. A frame for secondary batteries according to the present disclosure comprises: an upper cooling plate and a lower cooling plate having a plate shape and arranged to be spaced apart by a predetermined distance from each other facing each other; a main frame having four sides and configured to encompass the outer peripheral portions of the upper cooling plate and the lower cooling plate, to mount the outer peripheral portions of pouch-type secondary batteries thereto, and to enable two or more main frames to be stacked; and a support member arranged between the upper cooling plate and the lower cooling to support both cooling plates.

EP2325922A1 discloses a battery pack comprising at least a first battery module and a second battery module, wherein the second battery module is arranged below the first battery module along a first direction. The first and second battery module each comprise a plurality of secondary batteries stacked along a second direction, wherein at least one of the secondary batteries comprises a gas vent. The first and second battery module each further comprise a top plate disposed on the top surface of the plurality of secondary batteries, and a bottom plate formed below the bottom surface of the plurality of secondary batteries, wherein the bottom plate of the first battery module and the top plate of the second battery module are contacting each other. Further provided is at least one opening arranged in the top plate being formed at a location corresponding to locations of the gas vent of the at least one secondary battery. In this way, gas generated inside a secondary battery can be vented.

CN106684287A discloses a battery module. The battery module includes: a plurality of single cells; a pole connecting piece for connecting the poles of the plurality of single cells, so that the plurality of single cells are connected in series and/or in parallel; temperature control and gas conduction, covering the pole connecting piece, and having a first opening, a second opening and a third opening, where the first opening is used for air intake, the second opening is used for exhaust air, and the third opening is arranged in the position corresponding to the pole connecting piece, which makes the gas passes through and contacts the pole connecting piece in the process of flowing from the first opening to the second opening; the module frame is used for accommodating the plurality of single body battery. The battery module is designed for the temperature control and air guide device for the key part of temperature control - the pole and pole connecting piece of the single battery, which can improve the temperature control effect and reduce the time-consuming of temperature adjustment.

CN206595314U discloses a pressure release blast resistant construction for electric vehicle and battery package. The construction includes a battery box, the battery box inside has a closed cavity for accommodating the battery pack, and a number of pressure relief holes communicated with the closed cavity are arranged on the box wall of the battery box. A thinned area where rupture occurs when a closed cavity is overpressurized. The technical solution is to set a pressure relief hole in the battery box, the pressure relief hole is blocked by an explosion-proof valve, and the explosion-proof valve has a local thinning structure. The thinned part will crack first, and the gas with higher pressure in the battery box will be ejected from the explosion-proof valve at the crack. The explosion gave the occupants more time to escape and reduced casualties.

CN101867029A discloses an explosion-proof exhaust structure of a power battery. The power battery includes a box body, a guide groove, an explosion-proof port, a safety valve, and a hose; the guide groove connects each explosion-proof port or safety valve of the power battery, and the hose is connected between the guide grooves, and the end of the hose is directly connected with the outer wall of the box body to form a general pressure relief port, all explosion-proof vents or safety valves are directly connected to the outside world through passages formed by guide grooves or hoses, and are safely isolated from high-temperature terminals and other components in the box body. The guide groove is in close contact with the hose and other structures in the box body. The advantages are that active protection, rapid pressure relief and effective isolation can significantly improve the safety level of battery groups or battery packs; air pressure sensors or gas analyzers are connected to achieve early warning or dynamic fault analysis; the manufacturing process of guide grooves and hoses is relatively simple, and the cost relatively cheap, easy to implement, but high temperature-resistant insulating guide grooves can also play a role in fixing the cells.

### SUMMARY

The invention is set out in the appended set of claims.

The beneficial effects of the present application lie in that
the present application provides a battery pack. The battery pack includes a case and a plurality of battery cells arranged at the bottom of the case, the plurality of cells are stacked together; in addition, an end surface, facing the bottom of the case, of each of the cells is provided with an explosion-proof valve; specifically, a cavity structure is provided in the bottom of the case; a structural layer, facing the explosion-proof valve, of the bottom of the case is provided with a weak area; and gas in the battery cell during thermal runaway of any battery cell may be collected by the weak area into the cavity structure and then is discharged. Since the explosion-proof valve is arranged on the end surface, facing the bottom of the case, of each cell, when one or more cells inside the case are subjected to thermal runaway, a high-temperature and high-pressure gas produced by the thermal runaway of the cell is ejected toward the bottom of the case other than in a direction of a vehicle cabin, thereby guaranteeing the safety of people in the vehicle cabin. The high-temperature gas produced by the thermal runaway of the cell may be collected by the weak area, at the bottom of the case, into the cavity structure and discharged into the outside environment. In such a design structure, an ejection direction of gas at the explosion-proof valve during the thermal runaway of the cell is changed by means of an inverted cell, such that ejection in the direction of the vehicle cabin is avoided and the safety of people in the vehicle cabin is guaranteed. Meanwhile, the cavity structure is provided at the bottom of the case so as to guide the gas produced during the thermal runaway of the battery cell into the outside environment, thereby further improving the safety of the battery pack.

### BRIEF DESCRIPTION OF THE DRAWINGS

In order to more clearly illustrate technical solutions in the particular embodiments of the present application or in the prior art, a brief introduction to the accompanying drawings required for the description of the particular embodiments or the prior art will be provided below. Obviously, the accompanying drawings in the following description are some of the embodiments of the present application, and those of ordinary skill in the art may still derive other drawings from these accompanying drawings without any creative effort.
Fig. 1 is an exploded view of a battery pack provided by an embodiment of the present application;
Fig. 2 is a schematic structural diagram of connection between a cell and a case provided by an embodiment of the present application;
Fig. 3 is a schematic structural diagram of connection between a flow guide member and the case in Fig. 1;
Fig. 4 is a schematic structural diagram in an A-A direction in Fig. 3;
Fig. 5 is a schematic structural diagram in a B-B direction in Fig. 3.

### DESCRIPTION OF REFERENCE SIGNS

1 - Battery cell;
2 - Case;
   20 - weak area;
   21 - Bottom cavity;
      211 - Upper plate;
      212 - Lower plate;
   22 - Side end member;
      221 - First side end member;
         2211 - Exhaust hole;
      222 - Second side end member;
      223 - Third side end member;
      224 - Fourth side end member;
      225 - Bus hole;
   23 - Supporting plate;
      231 - Communication hole;
3 - Sealing member;
4 - First flow channel;
5 - Second flow channel;
6 - Third flow channel;
7 - One-way valve;
8 - Flow guide member;
   81 - Flow guide gas channel;
9 - Protective plate.

### DESCRIPTION OF EMBODIMENTS

The technical solutions of the present invention will be described below clearly and completely in conjunction with the accompanying drawings.

Specifically, a battery pack comprises a case 2 and a plurality of battery cells 1 accommodated inside the case 2, the case 2 is divided into an upper part and a lower part, and the upper part and the lower part are hermetically connected. Further, the plurality of battery cells 1 are stacked together. When the battery cell 1 operates, a large amount of heat may be produced due to discharge of a positive electrode and a negative electrode of the battery cell 1 and a chemical reaction of an electrolytic solution inside the battery cell 1, and heat produced by discharge of the positive electrode and the negative electrode of the battery cell 1 and the chemical reaction of the electrolytic solution inside the battery cell 1 under short circuit, overcharging, etc. is far beyond a normal value, thereby causing thermal runaway and producing a large amount of high-temperature and high-pressure gas.

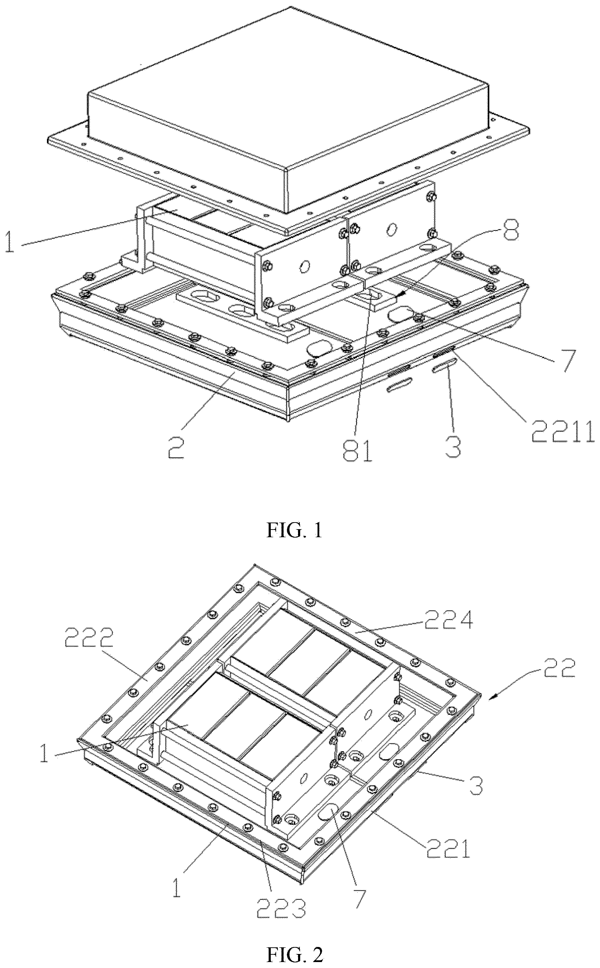

As shown in Fig. 1, Fig. 2, Fig. 4 and Fig. 5, in this embodiment, the end surface, facing the bottom of the case 2, of each of the battery cells 1 arranged inside the case 2 is provided with an explosion-proof valve, specifically, a cavity structure is provided in the bottom of the case 2, a structural layer, facing the explosion-proof valve, of the bottom of the case 2 is provided with a weak area 20, and gas in the battery cell 1 during thermal runaway of any battery cell 1 may be collected by the weak area 20 into the cavity structure and then is discharged. Since the explosion-proof valve is arranged on the end surface, facing the bottom of the case 2, of each of the battery cells 1, when one or more battery cells 1 inside the case 2 are subjected to thermal runaway, a high-temperature and high-pressure gas produced by the thermal runaway of the battery cell 1 is ejected toward the bottom of the case 2 other than in a direction of a vehicle cabin, thereby guaranteeing the safety of people in the vehicle cabin. The high-temperature gas produced by the thermal runaway of the battery cell 1 may be collected by the weak area 20, at the bottom of the case 2, into the cavity structure and discharged into the outside environment. In such a design structure, an ejection direction of the gas during the thermal runaway of the battery cell 1 is changed by changing the position of the explosion-proof valve, such that ejection in the direction of the vehicle cabin is avoided and the safety of people in the vehicle cabin is guaranteed. Meanwhile, the cavity structure is provided at the bottom of the case 2 so as to guide the gas produced by the thermal runaway of the battery cell 1 into the outside environment, thereby further improving the safety of the battery pack.

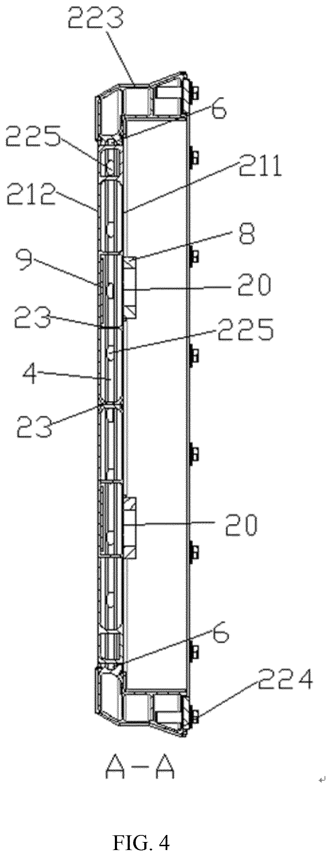

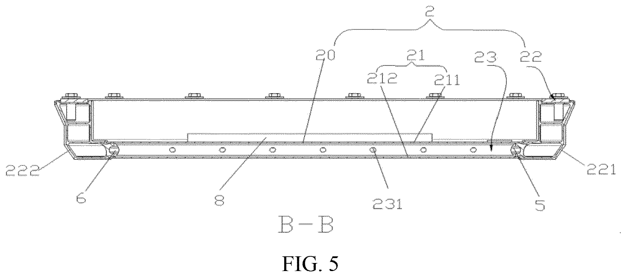

As shown in Fig. 4 and Fig. 5, further, the case 2 comprises a bottom cavity 21, specifically, the bottom cavity 21 comprises an upper plate 211 and a lower plate 212 which are spaced apart in a height direction, the upper plate 211 and the lower plate 212 form the cavity structure, and the plurality of stacked battery cells 1 may be directly connected to the upper plate 211 in a manner of bonding, bolting, etc. In this embodiment, to improve structural strength of the bottom cavity 21, and prevent, after the battery cell 1 is placed, the deformation of the bottom cavity 21from affecting smoothness of discharging gas by the cavity structure, a plurality of supporting plates 23 are arranged at intervals between the upper plate 211 and the lower plate 212, and the supporting plate 23 may improve the structural strength of the bottom cavity 21. Further, a first flow channel 4 is formed between the adjacent supporting plates 23, and the gas produced by the thermal runaway of the battery cell 1 may enter the corresponding first flow channel 4 through the weak area 20, and the supporting plate 23 guarantees that the whole case 2 may support the weight of the battery cell 1, and also guarantees that the gas is normally discharged during the thermal runaway of the battery cell 1 at the same time.

As shown in Fig. 4, the first flow channel 4 may be formed between the adjacent supporting plates 23, and certainly, the first flow channel 4 can also be arranged separately. In this embodiment, for guaranteeing that the gas may be discharged within safety time and improving safety, preferably, each supporting plate 23 is provided with a plurality of communication holes 231, all the first flow channels 4 are in communication with one another by means of the communication holes 231, that is, the gas produced during the thermal runaway of any one or more battery cells 1 may spread into other first flow channels 4 along a corresponding first flow channel 4, such that space for accommodating the gas is expanded, a gas pressure may be rapidly reduced, and explosion caused by an excessive gas pressure due to rapid accumulation of the gas is avoided.

Further, the case 2 further comprises a plurality of side end members 22, all the side end members 22 are sequentially connected end to end to form a through accommodating cavity in an enclosed manner, and an opening of the accommodating cavity is capped with the bottom cavity 21 so as to form the case 2, wherein at least one of the side end members 22 is provided with an exhaust hole 2211, each of the first flow channels 4 is in communication with the corresponding exhaust hole 2211, and the gas in the first flow channel 4 may be discharged to the outside of the case 2 by means of the corresponding exhaust hole 2211. For a corresponding relationship between the first flow channel 4 and the exhaust hole 2211, each first flow channel 4 may correspond to one exhaust hole 2211, or the plurality of first flow channels 4 may correspond to one exhaust hole 2211 as long as gas in each first flow channel 4 may be guaranteed to be discharged by means of the exhaust hole 2211.

As shown in Fig. 1, the exhaust hole 2211 may be in direct communication with the outside environment. In this embodiment, for preventing dust, moisture, etc. of the outside environment from entering the battery pack, the battery pack further comprises further comprises a sealing member 3 for sealing the exhaust hole 2211, and the sealing member 3 is arranged to open in response to an increase of pressure in the cavity structure. The sealing member 3 may be a one-way valve 7, and when the pressure in the cavity structure is greater than a set value, the one-way valve 7 is opened. The sealing member 3 may be a low-strength structure, and after the pressure in the cavity structure reaches a certain pressure, the low-strength structure is damaged and therefore opened. The sealing member 3 may be made of plastic, metal, etc., in addition, the sealing member 3 and the exhaust hole 2211 may be arranged in the exhaust hole 2211 in a manner of bonding, clamping, etc., for guaranteeing that the sealing member 3 may rapidly open the increase of pressure in the cavity structure of the exhaust hole 2211, in this embodiment, preferably, the sealing member 3 is bound to the exhaust hole 2211, and when gas in the cavity structure is greater than a bonding force, the sealing member 3 is opened.

One or more exhaust holes 2211 may be provided, and the specific number of exhaust holes 2211 may be set according to the design and specific model of the battery pack as long as it is guaranteed that gas in the cavity structure of the bottom cavity 21 may be discharged within specified time. In this embodiment, the number of the exhaust holes 2211 is not specifically defined.

The upper plate 211 and the lower plate 212 may be connected to the supporting plate 23 in a manner of bonding, clamping, welding, etc., and the side end members 22, as well as the side end member 22 and the bottom cavity 21 may be connected together in a manner of bonding, clamping, welding, etc. In this embodiment, for guaranteeing the overall structural strength of the case 2, preferably, the upper plate 211, the lower plate 212 and the supporting plate 23 are integrally formed.

As shown in Fig. 2 and Fig. 5, specifically, the side end member 22 comprises a first side end member 221 and a second side end member 222, and the first side end member 221 and the second side end member 222 are arranged opposite each other. With further reference to Fig. 4, any opening direction of the first flow channel 4 may not face a direction of the exhaust hole 2211. In this embodiment, for improving fluidity of gas in the first flow channel 4 and discharging gas in the cavity structure as soon as possible, further, the first side end member 221 is provided with the exhaust hole 2211, the first flow channel 4 is located between the first side end member 221 and the second side end member 222, and the first flow channel 4 extends in a direction pointing to the second side end member 222 from the first side end member 221.

In this embodiment, for further expanding space for accommodating the gas, rapidly reducing a gas pressure, and guaranteeing the safety of the battery pack, a first gap is provided between the end surface, facing the first end member 221, of the supporting plate 23 and the first side end member 221, the first gap(s) is/are in communication with one another to form a second flow channel 5, and the second flow channel 5 is in communication with each first flow channel 4.

Specifically, the first gap may be formed by indentation of the inner surface of the first side end member 221, or formed by indentation of the end surface of the supporting plate 23 corresponding to the first side end member 221, or formed by indentations of the first side end member and the supporting plate. In this embodiment, a forming manner of the first gap is not specifically defined.

As shown in Fig. 2 and Fig. 4, the side end member 22 further comprises a third side end member 223 and a fourth side end member 224, and the first side end member 221, the second side end member 222, the third side end member 223 and the fourth side end member 224 are sequentially connected end to end to form the through accommodating cavity in an enclosed manner. In this embodiment, for further expanding the space for accommodating the gas and improving the safety of the battery pack, specifically, a second gap is provided between at least one of the second side end member 222, the third side end member 223 and the fourth side end member 224 and the end surface of the corresponding supporting plate 23, the second gap(s) is/are in communication with one another to form a third flow channel 6, and the second flow channel 5 and each of the first flow channels 4 are in communication with the third flow channel 6.

In this embodiment, the second gap is formed in the same manner as the first gap, which will not be repeated herein.

The side end member 22 may be of a plate-shaped structure. In this embodiment, as shown in Fig. 5, the side end member 22 is of a hollowed structure, and the side end member 22 is provided with a bus hole 225 so that the second flow channel 5 is in communication with the hollowed structure inside the side end member 22 by means of the bus hole 225. Furthermore, for expanding the space for accommodating the gas, the hollowed structures of all the side end members 22 are in communication with one another. The exhaust hole 2211 is arranged in an outer side surface of the side end member 22.

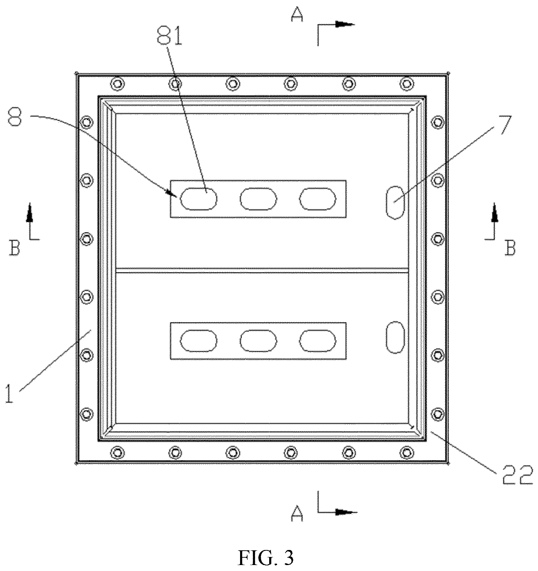

As shown in Fig. 1 and Fig. 3, further, each battery cell 1 may be directly connected to the upper plate 211 so as to guarantee that gas produced by thermal runaway of the battery cell 1 may flow into the cavity structure of the bottom cavity 21. In this embodiment, a flow guide member 8 is further arranged between the upper plate 211 and the battery cell 1, a flow guide gas channel 81 is arranged in the position, corresponding to the explosion-proof valve, of the flow guide member 8, gas ejected from the explosion-proof valve may completely flow into the cavity structure of the bottom cavity 21 under the action of guiding of the flow guide gas channel 81, thereby guaranteeing safety during gas discharge, and for guaranteeing the safety, the flow guide member 8 is made of a flame-resistant material.

As shown in Fig. 4, in this embodiment, gas produced by the thermal runaway of the battery cell 1 has a very high temperature and may damage the structure of the bottom cavity 21. For further guaranteeing that the gas produced by the thermal runaway of the battery cell 1 completely flows into the cavity structure of the bottom cavity 21, a flame-resistant protective plate 9 is arranged on the inner surface of the lower plate 212, and specifically, the protective plate 9 is arranged corresponding to the weak area 20.

In this embodiment, the flow guide member 8 and the protective plate 9 may be made of mica plates, rock wool, etc., which will not be specifically defined herein.

As shown in Fig. 1, Fig. 2 and Fig. 3, the gas produced by the thermal runaway of the battery cell 1 may completely flow into the cavity structure of the bottom cavity 21, and then flow to the outside environment by means of the exhaust hole 2211 of the side end member 22. When the thermal runaway condition of the battery cell 1 is serious, the amount of produced gas exceeds a unit flow amount of the exhaust hole 2211, for guaranteeing the safety of the battery pack and a vehicle, in this embodiment, the upper plate 211 is provided with a one-way valve 7, a gas inlet of the one-way valve 7 is in communication with the cavity structure, and when gas produced in the cavity structure of the bottom cavity 21 cannot be discharged by means of the exhaust hole 2211 within specified unit time, that is, a gas pressure in the cavity structure exceeds a bearable gas value, at this time, the gas in the cavity structure of the bottom cavity 21 may also flow out of the one-way valve 7 at the same time, thereby improving the safety.

In this embodiment, for guaranteeing that the one-way valve 7 may be opened only when a gas pressure value in the cavity structure of the bottom cavity 21 exceeds the bearable gas pressure value, specifically, a set opening pressure of the one-way valve 7 is not smaller than a set value of pressure produced by the gas accommodated in the cavity structure of the bottom cavity 21, a specific structure of the one-way valve 7 structure is not defined herein, and a one-way valve 7 which meets the above opening condition can be applied to the battery pack.

A substance discharged from the explosion-proof valve by the battery cell 1 may bring a flame, for further improving the safety performance of the battery pack, the cavity structure is further internally provided with a flame-resistant bag, the flame-resistant bag is internally provided with a flame-resistant medium, and the flame-resistant bag is located in the cavity structure, and is arranged corresponding to the weak area 20. When the flame enters, along with the gas, the cavity structure from the weak area 20, the flame comes into contact with the flame-resistant medium and cannot spread to other parts in the cavity structure.

## Claims

1. A battery pack, comprising:
a case (2), a cavity structure being provided in the bottom of the case (2); and
a plurality of battery cells (1), the plurality of battery cells (1) being stacked at the bottom of the case (2), and an end surface, facing the bottom of the case (2), of each of the battery cells (1) being provided with an explosion-proof valve,
wherein a structural layer, facing the explosion-proof valve, of the bottom of the case (2) is provided with a weak area (20), and gas in the battery cell (1) during thermal runaway of any battery cell (1) may be collected via the weak area (20) into the cavity structure and then is discharged;
wherein the case (2) comprises a bottom cavity (21), the bottom cavity (21) comprising an upper plate (211) and a lower plate (212);
wherein a flow guide member (8) is arranged between the upper plate (211) and the battery cell (1), a flow guide gas channel (81) is arranged in a position, corresponding to the explosion-proof valve, of the flow guide member (8), and the flow guide member (8) is made of a flame-resistant material; and
wherein the upper plate (211) and the lower plate (212) are spaced apart in a height direction of the case (2), and form the cavity structure, the end surface, facing the upper plate (211), of each of the battery cells (1) is provided with the explosion-proof valve, and the structural layer, facing the explosion-proof valve, of the upper plate (211) is provided with the weak area (20); and a plurality of supporting plates (23), arranged at intervals between the upper plate (211) and the lower plate (212).

2. The battery pack according to claim 1, wherein a first flow channel (4) is formed between the adjacent supporting plates (23), and gas produced by the thermal runaway of the battery cell (1) may enter the corresponding first flow channel (4) through the weak area (20).

3. The battery pack according to claim 2, wherein the case (2) further comprises:
a plurality of side end members (22), each of the side end members (22) being sequentially connected end to end to form a through accommodating cavity in an enclosed manner, and an opening of the accommodating cavity being capped with the bottom cavity (21) so as to form the case (2); and
wherein at least one of the side end members (22) is provided with an exhaust hole (2211), each of the first flow channel (4) is in communication with the corresponding exhaust hole (2211) to the first flow channel (4), and gas in the first flow channel (4) may be discharged to the outside of the case (2) via the corresponding exhaust hole (2211).

4. The battery pack according to claim 2 or 3, wherein each of the supporting plates (23) is provided with a plurality of communication holes (231), and all the first flow channels (4) are in communication with one another by means of the communication holes (231).

5. The battery pack according to claim 3, wherein the side end member (22) comprises a first side end member (221) and a second side end member (222), the first side end member (221) and the second side end member (222) being arranged opposite each other; and
the first flow channel (4) is located between the first side end member (221) and the second side end member (222), and the first flow channel (4) extends in a direction pointing to the second side end member (222) from the first side end member (221).

6. The battery pack according to claim 5, wherein a first gap is provided between an end surface, facing the first side end member (221), of the supporting plate (23) and the first side end member (221), and the first gap is in communication with one another to form a second flow channel (5); and
the second flow channel (5) is in communication with each of the first flow channels (4).

7. The battery pack according to claim 6, wherein the first side end member (221) is provided with the exhaust hole (2211).

8. The battery pack according to claim 6, wherein the side end member (22) further comprises a third side end member (223) and a fourth side end member (224), the first side end member (221), the second side end member (222), the third side end member (223) and the fourth side end member (224) being sequentially connected end to end to form the through accommodating cavity in an enclosed manner;
a second gap is provided between at least one of the second side end member (222), the third side end member (223) and the fourth side end member (224), and an end surface of the corresponding supporting plate (23), and the second gap is in communication with one another to form a third flow channel (6); and
the second flow channel (5) and each of the first flow channels (4) are in communication with the third flow channel (6).

9. The battery pack according to any one of claims 1 to 8, wherein the upper plate (211) is provided with a one-way valve (7), a gas inlet of the one-way valve (7) being in communication with the cavity structure.

10. The battery pack according to any one of claims 1 to 9, wherein the weak area (20) is arranged corresponding to the flow guide gas channel (81).

11. The battery pack according to any one of claims 1 to 10, further comprising:
a protective plate (9), arranged in an inner surface of the lower plate (212), wherein the protective plate (9) is arranged corresponding to the weak area (20), and the protective plate (9) is made of a flame-resistant material.

12. The battery pack according to any one of claims 1 to 11, further comprising a flame-resistant bag, wherein the flame-resistant bag is internally provided with a flame-resistant medium, and the flame-resistant bag is located in the cavity structure, and is arranged corresponding to the weak area (20).

13. The battery pack according to claim 3, further comprising:
a sealing member (3), configured to seal the exhaust hole (2211), wherein the sealing member (3) is arranged to open in response to an increase of pressure in the cavity structure.

14. A vehicle, comprising a battery pack in any one of claims 1 to 13.

## Patentansprüche

1. Batteriepack, umfassend:
ein Gehäuse (2), wobei im Boden des Gehäuses (2) eine Hohlraumstruktur vorgesehen ist;
und
eine Vielzahl von Batteriezellen (1), wobei die Vielzahl von Batteriezellen (1) am Boden des Gehäuses (2) gestapelt sind und eine dem Boden des Gehäuses (2) zugewandte Endfläche jeder der Batteriezellen (1) mit einem Explosionsschutzventil versehen ist,
wobei eine dem Explosionsschutzventil zugewandte Strukturschicht des Bodens des Gehäuses (2) mit einem schwachen Bereich (20) versehen ist und Gas in der Batteriezelle (1) während eines thermischen Durchgehens einer beliebigen Batteriezelle (1) über den schwachen Bereich (20) in die Hohlraumstruktur gesammelt werden kann und anschließend abgelassen wird;
wobei das Gehäuse (2) einen Bodenhohlraum (21) umfasst, wobei der Bodenhohlraum (21) eine obere Platte (211) und eine untere Platte (212) umfasst;
wobei ein Strömungsleitelement (8) zwischen der oberen Platte (211) und der Batteriezelle (1) angeordnet ist, ein Strömungsleitgaskanal (81) an einer dem Explosionsschutzventil entsprechenden Position des Strömungsleitelements (8) angeordnet ist und das Strömungsleitelement (8) aus einem flammhemmenden Material besteht; und
wobei die obere Platte (211) und die untere Platte (212) in einer Höhenrichtung des Gehäuses (2) voneinander beabstandet sind und die Hohlraumstruktur bilden, die der oberen Platte (211) zugewandte Endfläche jeder der Batteriezellen (1) mit dem Explosionsschutzventil versehen ist und die dem Explosionsschutzventil zugewandte Strukturschicht der oberen Platte (211) mit dem schwachen Bereich (20) versehen ist; und eine Vielzahl von Stützplatten (23), die in Abständen zwischen der oberen Platte (211) und der unteren Platte (212) angeordnet sind.

2. Batteriepack nach Anspruch 1, wobei zwischen benachbarten Stützplatten (23) ein erster Strömungskanal (4) ausgebildet ist und durch das thermische Durchgehen der Batteriezelle (1) erzeugtes Gas durch den schwachen Bereich (20) in den entsprechenden ersten Strömungskanal (4) eintreten kann.

3. Batteriepack nach Anspruch 2, wobei das Gehäuse (2) ferner Folgendes umfasst:
eine Vielzahl von seitlichen Endelementen (22), wobei jedes der seitlichen Endelemente (22) nacheinander Ende an Ende verbunden ist, um einen durchgehenden Aufnahmehohlraum in geschlossener Weise zu bilden, wobei eine Öffnung des Aufnahmehohlraums mit dem Bodenhohlraum (21) abgedeckt ist, um das Gehäuse (2) zu bilden; und
wobei mindestens eines der seitlichen Endelemente (22) mit einem Auslassloch (2211) versehen ist, jeder der ersten Strömungskanäle (4) mit dem entsprechenden Auslassloch (2211) zum ersten Strömungskanal (4) in Verbindung steht und Gas im ersten Strömungskanal (4) über das entsprechende Auslassloch (2211) zur Außenseite des Gehäuses (2) abgeleitet werden kann.

4. Batteriepack nach Anspruch 2 oder 3, wobei jede der Stützplatten (23) mit einer Vielzahl von Verbindungslöchern (231) versehen ist und alle ersten Strömungskanäle (4) mittels der Verbindungslöcher (231) miteinander in Verbindung stehen.

5. Batteriepack nach Anspruch 3, wobei das seitliche Endelement (22) ein erstes seitliches Endelement (221) und ein zweites seitliches Endelement (222) umfasst, wobei das erste seitliche Endelement (221) und das zweite seitliche Endelement (222) einander gegenüberliegend angeordnet sind; und
der erste Strömungskanal (4) zwischen dem ersten seitlichen Endelement (221) und dem zweiten seitlichen Endelement (222) angeordnet ist und sich der erste Strömungskanal (4) in einer Richtung erstreckt, die vom ersten seitlichen Endelement (221) zum zweiten seitlichen Endelement (222) weist.

6. Batteriepack nach Anspruch 5, wobei zwischen einer dem ersten seitlichen Endelement (221) zugewandten Endfläche der Stützplatte (23) und dem ersten seitlichen Endelement (221) ein erster Spalt vorgesehen ist, wobei der erste Spalt miteinander in Verbindung steht, um einen zweiten Strömungskanal (5) zu bilden; und
der zweite Strömungskanal (5) mit jedem der ersten Strömungskanäle (4) in Verbindung steht.

7. Batteriepack nach Anspruch 6, wobei das erste seitliche Endelement (221) mit dem Auslassloch (2211) versehen ist.

8. Batteriepack nach Anspruch 6, wobei das seitliche Endelement (22) ferner ein drittes seitliches Endelement (223) und ein viertes seitliches Endelement (224) umfasst, wobei das erste seitliche Endelement (221), das zweite seitliche Endelement (222), das dritte seitliche Endelement (223) und das vierte seitliche Endelement (224) nacheinander Ende an Ende verbunden sind, um den durchgehenden Aufnahmehohlraum in geschlossener Weise zu bilden;
zwischen mindestens einem von dem zweiten seitlichen Endelement (222), dem dritten seitlichen Endelement (223) und dem vierten seitlichen Endelement (224) einerseits und einer Endfläche der entsprechenden Stützplatte (23) andererseits ein zweiter Spalt vorgesehen ist, wobei der zweite Spalt miteinander in Verbindung steht, um einen dritten Strömungskanal (6) zu bilden; und
der zweite Strömungskanal (5) und jeder der ersten Strömungskanäle (4) mit dem dritten Strömungskanal (6) in Verbindung stehen.

9. Batteriepack nach einem der Ansprüche 1 bis 8, wobei die obere Platte (211) mit einem Einwegventil (7) versehen ist, wobei ein Gaseinlass des Einwegventils (7) mit der Hohlraumstruktur in Verbindung steht.

10. Batteriepack nach einem der Ansprüche 1 bis 9, wobei der schwache Bereich (20) entsprechend dem Strömungsleitgaskanal (81) angeordnet ist.

11. Batteriepack nach einem der Ansprüche 1 bis 10, umfassend ferner:
eine Schutzplatte (9), die in einer Innenfläche der unteren Platte (212) angeordnet ist, wobei die Schutzplatte (9) entsprechend dem schwachen Bereich (20) angeordnet ist und die Schutzplatte (9) aus einem flammhemmenden Material besteht.

12. Batteriepack nach einem der Ansprüche 1 bis 11, umfassend ferner einen flammhemmenden Beutel, wobei der flammhemmende Beutel im Inneren mit einem flammhemmenden Medium versehen ist, und wobei der flammhemmende Beutel sich in der Hohlraumstruktur befindet und entsprechend dem schwachen Bereich (20) angeordnet ist.

13. Batteriepack nach Anspruch 3, umfassend ferner:
ein Dichtungselement (3), das dazu konfiguriert ist, das Auslassloch (2211) abzudichten, wobei das Dichtungselement (3) so angeordnet ist, dass es sich als Reaktion auf einen Druckanstieg in der Hohlraumstruktur öffnet.

14. Fahrzeug, umfassend einen Batteriepack nach einem der Ansprüche 1 bis 13.

## Revendications

1. Bloc-batterie, comprenant :
un boîtier (2), une structure de cavité étant prévue dans le fond du boîtier (2) ; et
une pluralité de cellules de batterie (1), la pluralité de cellules de batterie (1) étant empilées au fond du boîtier (2), et une surface de bout faisant face au fond du boîtier (2) de chacune des cellules de batterie (1) étant pourvue d'une vanne antidéflagrante,
dans lequel une couche structurelle faisant face à la vanne antidéflagrante du fond du boîtier (2) est pourvue d'une zone faible (20), et un gaz dans la cellule de batterie (1) lors d'une fuite thermique de toute cellule de batterie (1) est collecté via la zone faible (20) vers la structure de cavité puis est déchargé ;
dans lequel le boîtier (2) comprend une cavité inférieure (21), la cavité inférieure (21) comprenant une plaque supérieure (211) et une plaque inférieure (212) ;
dans lequel un élément de guidage d'écoulement (8) est disposé entre la plaque supérieure (211) et la cellule de batterie (1), un canal de gaz de guidage d'écoulement (81) est disposé à une position correspondant à la vanne antidéflagrante de l'élément de guidage d'écoulement (8), et l'élément de guidage d'écoulement (8) est réalisé en matériau résistant à la flamme ; et
dans lequel la plaque supérieure (211) et la plaque inférieure (212) sont espacées dans une direction de la hauteur du boîtier (2), et forment la structure de cavité, la surface terminale faisant face à la plaque supérieure (211) de chacune des cellules de batterie (1) est pourvue de la vanne antidéflagrante, et la couche structurelle faisant face à la vanne antidéflagrante de la plaque supérieure (211) est pourvue de la zone faible (20) ; et une pluralité de plaques de support (23) disposées à intervalles entre la plaque supérieure (211) et la plaque inférieure (212).

2. Bloc-batterie selon la revendication 1, dans lequel un premier canal d'écoulement (4) est formé entre les plaques de support (23) adjacentes, et un gaz produit par la fuite thermique de la cellule de batterie (1) est configuré pour pénétrer dans le premier canal d'écoulement (4) correspondant à travers la zone faible (20).

3. Bloc-batterie selon la revendication 2, dans lequel le boîtier (2) comprend en outre :
une pluralité d'éléments de bout latéraux (22), chacun des éléments de bout latéraux (22) étant relié en séquence bout à bout pour former, de manière fermée, une cavité d'accueil traversante, et une ouverture de la cavité d'accueil étant obturée par la cavité inférieure (21) afin de former le boîtier (2) ; et
dans lequel au moins un des éléments de bout latéraux (22) est pourvu d'un trou d'évacuation (2211), chacun des premiers canaux d'écoulement (4) étant en communication avec le trou d'évacuation (2211) correspondant vers le premier canal d'écoulement (4), et un gaz dans le premier canal d'écoulement (4) est configuré pour être déchargé vers l'extérieur du boîtier (2) par le trou d'évacuation (2211) correspondant.

4. Bloc-batterie selon la revendication 2 ou 3, dans lequel chacune des plaques de support (23) est pourvue d'une pluralité de trous de communication (231), et tous les premiers canaux d'écoulement (4) sont en communication les uns avec les autres par l'intermédiaire des trous de communication (231).

5. Bloc-batterie selon la revendication 3, dans lequel l'élément de bout latéral (22) comprend un premier élément de bout latéral (221) et un deuxième élément de bout latéral (222), le premier élément de bout latéral (221) et le deuxième élément de bout latéral (222) étant disposés à l'opposé l'un de l'autre ; et
le premier canal d'écoulement (4) est situé entre le premier élément de bout latéral (221) et le deuxième élément de bout latéral (222), et le premier canal d'écoulement (4) s'étend dans une direction orientée vers le deuxième élément de bout latéral (222) à partir du premier élément de bout latéral (221).

6. Bloc-batterie selon la revendication 5, dans lequel un premier espace est prévu entre une surface de bout faisant face au premier élément de bout latéral (221) de la plaque de support (23) et le premier élément de bout latéral (221), et le premier espace est en communication avec l'autre pour former un deuxième canal d'écoulement (5) ; et
le deuxième canal d'écoulement (5) est en communication avec chacun des premiers canaux d'écoulement (4).

7. Bloc-batterie selon la revendication 6, dans lequel le premier élément de bout latéral (221) est pourvu du trou d'évacuation (2211).

8. Bloc-batterie selon la revendication 6, dans lequel l'élément de bout latéral (22) comprend en outre un troisième élément de bout latéral (223) et un quatrième élément de bout latéral (224), le premier élément de bout latéral (221), le deuxième élément de bout latéral (222), le troisième élément de bout latéral (223) et le quatrième élément de bout latéral (224) étant reliés en séquence bout à bout pour former la cavité d'accueil de manière fermée ;
un deuxième espace est prévu entre au moins l'un parmi le deuxième élément de bout latéral (222), le troisième élément de bout latéral (223) et le quatrième élément de bout latéral (224), et une surface de bout de la plaque de support (23) correspondante, et le deuxième espace est en communication avec l'autre pour former un troisième canal d'écoulement (6) ; et
le deuxième canal d'écoulement (5) et chacun des premiers canaux d'écoulement (4) sont en communication avec le troisième canal d'écoulement (6).

9. Bloc-batterie selon l'une quelconque des revendications 1 à 8, dans lequel la plaque supérieure (211) est pourvue d'une vanne anti-retour (7), une entrée de gaz de la vanne anti-retour (7) étant en communication avec la structure de cavité.

10. Bloc-batterie selon l'une quelconque des revendications 1 à 9, dans lequel la zone faible (20) est disposée en correspondance avec le canal de gaz de guidage d'écoulement (81).

11. Bloc-batterie selon l'une quelconque des revendications 1 à 10, comprenant en outre :
une plaque protectrice (9), disposée à une surface interne de la plaque inférieure (212), la plaque protectrice (9) étant disposée en correspondance avec la zone faible (20), et la plaque protectrice (9) est réalisée en matériau résistant à la flamme.

12. Bloc-batterie selon l'une quelconque des revendications 1 à 11, comprenant en outre un sac résistant à la flamme, le sac résistant à la flamme étant pourvu, à sont intérieur, d'un médium résistant à la flamme, et le sac résistant à la flamme étant situé dans la structure de cavité, et étant disposé en correspondance avec la zone faible (20).

13. Bloc-batterie selon la revendication 3, comprenant en outre :
un élément d'étanchéité (3) configuré pour sceller le trou d'évacuation (2211), l'élément d'étanchéité (3) étant disposé pour s'ouvrir en réponse à une augmentation de la pression dans la structure de cavité.

14. Voiture, comprenant un bloc-batterie selon l'une quelconque des revendications 1 à 13.
